# EUROPEAN PATENT SPECIFICATION

(11) **EP 2 078 636 B1**
(45) Date of publication and mention of the grant of the patent: **18.12.2013**
(21) Application number: 08172222.5
(22) Date of filing: 19.12.2008
(51) Int. Cl.: B60N 2/36, B60R 5/04

(54) **Improvements in or relating to in-vehicle luggage systems**
Verbesserungen von oder im Zusammenhang mit Fahrzeuginnenraumgepäcksystemen
Améliorations de ou associées aux systèmes de bagages dans l'intérieur d'un véhicule

(30) Priority: 14.01.2008 GB 0800558
(43) Date of publication of application: 15.07.2009
(73) Proprietor: Nissan Motor Manufacturing (UK) Ltd., Cranfield Bedfordshire MK43 0DB (GB)
(72) Inventor: Cromarty, Michael, Cranfield, Bedfordshire MK43 0DB (GB)
(74) Representative: Holmes, Matthew William

(56) References cited:
- JP-A- 2006 335 096
- JP-A- 2008 265 708
- US-A1- 2006 061 120

## Description

The present invention relates to a luggage system for use in a vehicle and, in particular, to a luggage system for use in a vehicle with a suspended floor.

The rear luggage compartment within a vehicle, i.e. the volume of space that lies behind the rearmost seating row, provides a considerable volume of storage space. Especially in a MPV or SUV-type vehicle, there is typically a considerable height available which facilitates the easy stowage of large items, such as suitcases.

It is common for vehicle manufacturers to provide some means by which the luggage compartment may be subdivided as it is acknowledged that some cargoes can be damaged in transit if they remain unrestrained within the comparatively large area of the luggage compartment. To this end, manufacturers have provided a variety of fixed shelves and boxes that are ideally suited for carrying a plurality of small items. However, the problem with these systems is that they are inflexible and can compromise the carrying capability for larger items.

JP 2006 335096 describes such means as mentioned above.

In order to provide increased flexibility some manufacturers have provided one or more storage boards and a selection of mounting assemblies that allow the board or boards to be mounted in a number of different positions, including vertical and horizontal partitioning of the available space.

The mountings for these storage boards can be mounted on the interior trim. However, the interior trim is typically only a single thickness piece and therefore, under heavy braking, a load can impinge on a vertically mounted luggage board with sufficient force to damage the mountings and the interior trim.

It is against this background that the present invention has been made.

According to the present invention there is provided a luggage system for use in a vehicle comprising at least one seat mounted on a seat frame, the luggage system comprising: at least one mounting bracket comprising a recess for holding a luggage board in a substantially vertical position; and wherein the mounting bracket is mounted to the seat frame.

By mounting the bracket on the seat frame, rather than on the seat back or on the vehicle floor, the luggage system does not compromise the access any under floor storage capacity. Furthermore, the operation of the luggage system is also independent of the tilt angle of each of the seats.

The luggage system may further comprise a luggage board. The mounting bracket may be further configured to permit the luggage board to be retained in a substantially horizontal position.

In particular, the mounting bracket may be provided with a flat upper surface on which the luggage board rests when it is in the horizontal position. Furthermore, the vehicle may be provided with a ledge that is configured to interface with a part of the luggage board to maintain the board in a substantially horizontal configuration.

The advantage of the luggage board taking a horizontal configuration is that it provides for a flat luggage compartment floor. As this luggage compartment floor would not naturally be flat, the horizontal position of the luggage board divides out a lower volume of the luggage compartment the contents of which are hidden from view.

The luggage board may be carpet covered and has a light, honeycomb core. The carpet covering ensures that the interface between the board and the mounting bracket does not rattle and the light honeycomb core ensures that the board is light and therefore easily manipulated in a one handed operation.

The recess may be U-shaped and it may further have non-parallel wall. The non-parallel walls guide the luggage board into the recess.

The luggage board may have a front edge that is tapered in order to interface with the walls of the U-shaped recess. The tapered edge of the luggage board increases the area of the board that interfaces with the walls of the recess.

The angle of taper of the back edge of the luggage board may be different from the angle between the non-parallel walls of the recess. The angles are deliberately different to provide a pinched interface that will not squeak.

The luggage system may further comprise a cover board and an anchor point on the mounting bracket for pivotable mounting of the cover board. The cover board ensures that there is never a gap between the luggage board and the back of the seat, regardless of whether the seats are in the folded-flat or the up-right, in use position.

There may be two mounting brackets. One mounting bracket may be positioned at each side of the vehicle, mounted on the outboard side of the seat frame. The provision of two mounting brackets provides a stable system that is not easily subject to rotation of the luggage board.

A third mounting bracket may be provided approximately equidistant between the two mounting brackets. This provides additional reinforcement for the luggage board when it is in the horizontal configuration and prevents it from bending.

The seat frame may be further configured to move between a first in-use position and a second position and, wherein the mounting bracket is arranged to move with the seat. This provides the user with a luggage system that moves with the seat and can conveniently hold the luggage board irrespective of seat position. In this way, if the vehicle is provided with storage beneath the seat is may be accessed by placing the luggage board into the mounting bracket and moving the seat to a convenient position to access the storage area.

The present invention will now be described with reference, by way of example only, to the accompanying drawings in which:
Figures 1 to 4 show the luggage system and mounting bracket of the present invention with a luggage board in a horizontal configuration;
Figure 1 shows the luggage system providing the maximum luggage storage space over a flat bed;
Figure 2 is a cross sectional view through the luggage system when configured as shown in Figure 1;
Figure 3 shows the luggage system configured to allow the maximum number of available seats within the vehicle to be used; and
Figure 4 shows a cross section through the luggage system in the configuration shown in Figure 3.
Figures 5 to 8 show the luggage system and mounting bracket of the present invention with a luggage board in a vertical configuration;

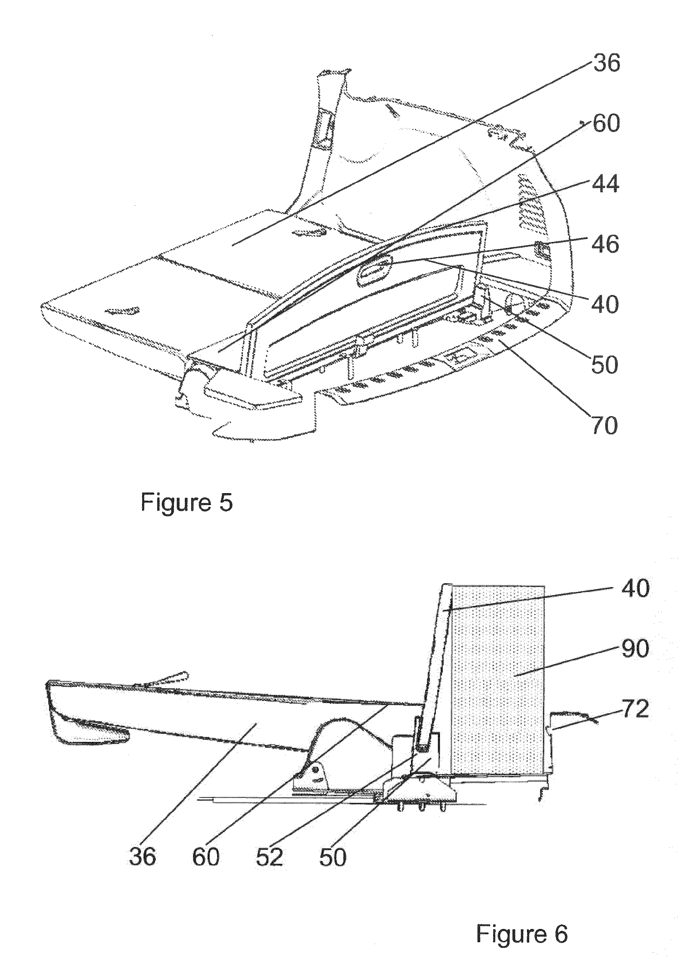

Figure 5 shows the luggage system providing a divided luggage storage space;
Figure 6 is a cross sectional view through the luggage system when configured as shown in Figure 5;

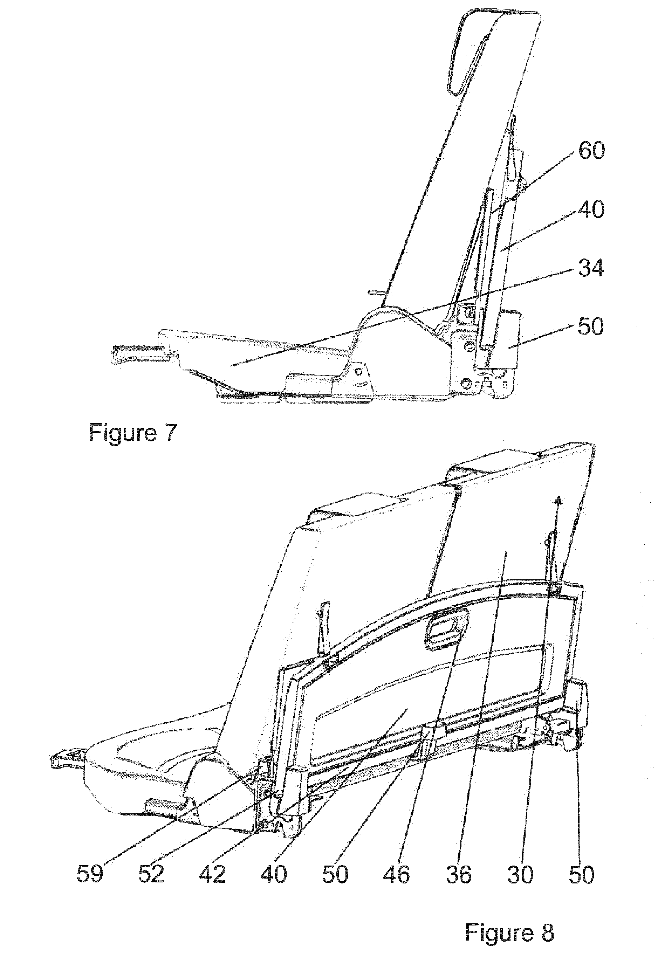

Figure 7 is a side view of the luggage system configured to allow the maximum number of available seats within the vehicle to be used;
Figure 8 is a part perspective view of the configuration shown in Figure 7.

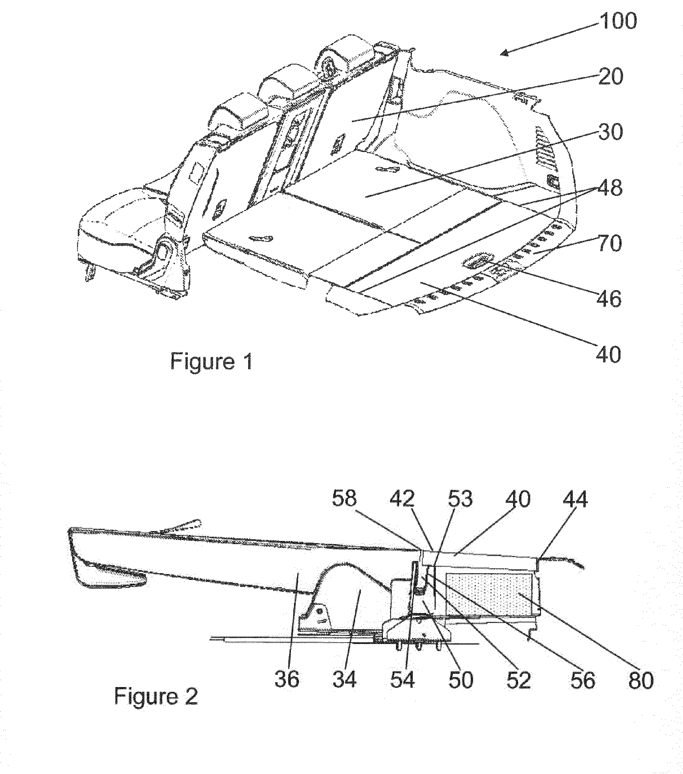

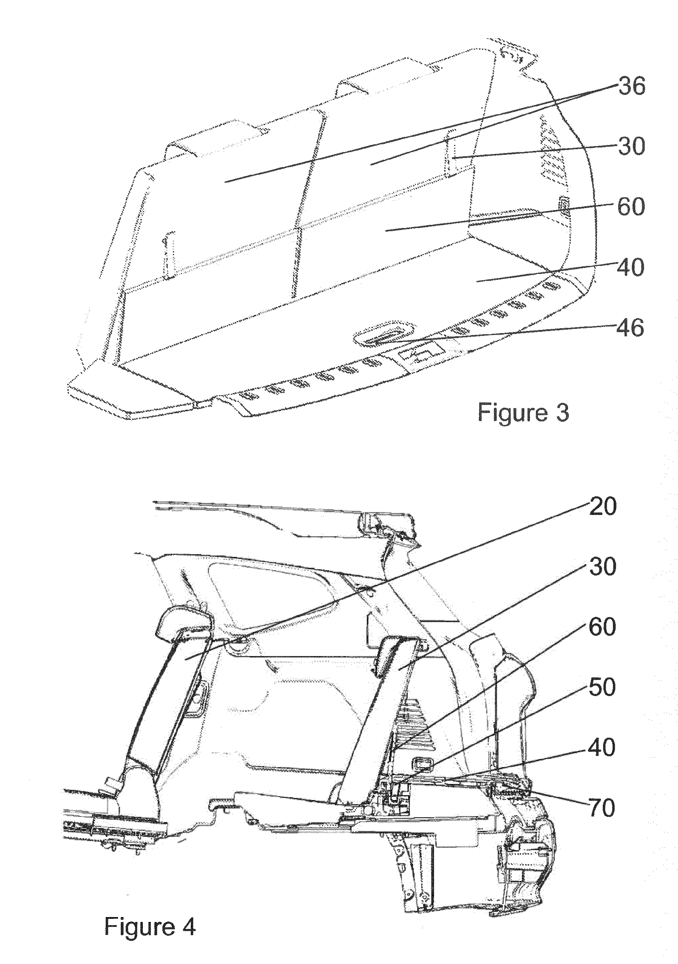

Figure 1 shows the second 20 and third 30 row seating and plate luggage rear 70 within a vehicle 100 comprising three seating rows. The third row 30 comprises a pair of occasional use seats that are configured to be foldable between an in-use position shown in Figures 3 and 4 and the stowed position shown in Figure 1. Each of the seats comprises a seat frame concealed within a seat base 34 and a seat back 36.

The third row seating 30 is configured so that the seat back 36 folds relative to the seat base 34 until the seat back 36 is substantially horizontal. Throughout the description, the terms "horizontal" and "vertical" are used to describe the position of the various components of the system 10. It will be readily apparent to the skilled man, that the terms "horizontal" and "vertical" are not intended to set precisely the angles between the components, but rather to give a feel for the overall orientation of a component. For example, when the seat back is in a vertical condition, it is typically inclined at around 14° to the vertical.

The luggage system 10 further comprises a luggage board 40, a mounting bracket 50 and a cover board 60. The luggage board 40 is a light yet strong board made using, for example, a honeycomb cardboard impregnated with Polyurethane.

The luggage board 40 is covered in carpet. The carpet ensures that the luggage board 40 does not squeak or rattle as a result of small movements of the board 40 relative to the other components of the system 10. The carpet also improves the perceived quality of the luggage board 40. The luggage board 40 has a front edge 42 which is tapered in order that it can interface with the mounting bracket 50 when the luggage board 40 is in a vertical configuration. The luggage board 40 also has a rear edge 44 that is curved to match the profile of the inner edge of the plate luggage rear 70. The luggage board 40 also has two side edges 48 that are substantially orthogonal to the front 44 and back 42 edges.

The luggage board 40 is also provided with a handle 46. The handle 46 consists of an oval shaped through-hole that is sized to accommodate the hand of the average user. The handle 46 is positioned close to the rear edge 44 of the luggage board so the handle 46 is easily accessible. The handle 46 is also positioned equidistant from the two side edges 48. The central positioning of the handle 46 ensures that the user can move the board 40 in a one-handed operation as the board 40 is balanced when it is lifted by the handle 46.

A mounting bracket 50 is attached to the seat frame. The mounting bracket 50 includes a U-shaped recess 52 into which the board 40 can be mounted when the board 40 is placed in the vertical configuration as shown in Figures 5 to 8. The U-shaped recess has two walls 54, 56 which are not parallel. The walls 54, 56 are tapered so that, as the luggage board 40 is inserted into the recess the front edge 42 of the luggage board 40 is pinched by the walls 54, 56 of the recess 52. The angle of taper of the walls 54, 56 is different from the angle of taper of the front edge 42 of the luggage board. The front edge 42 of the luggage board has an angle of taper of 2° to 5°. In particular, the front edge 42 of the luggage board has an angle of taper of 3°. The tapered shape of the U-shaped recess 52 also guides the board 40 into the mounting bracket 50.

The mounting bracket 50 has a flat upper surface 53. When the luggage board 40 is in the horizontal configuration, the front edge 42 of the luggage board rests on the upper surface 53 of the mounting bracket 50.

The mounting bracket 50 also includes an anchor point 58 for the cover board 60. The anchor point 58 provides a pivotable attachment for the cover board 60. In this example, the anchor point 58 is provided by a box-section portion 59 that is adjacent to the wall 54. When the luggage board 40 is in the horizontal configuration, the front edge 42 abuts the box-section portion 59 and the rear edge 44 rests on a ledge 71 provided in the plate luggage rear 70.

The ledge 71 provides a horizontal surface for the rear edge 44 to rest on and a vertical surface against which the rear edge 44 abuts. This is most apparent in Figure 4. The horizontal surface of the ledge 71 is situated below the level of plate luggage rear 70 by approximately the distance corresponding to the thickness of the luggage board 40 so that, when the rear edge 44 is resting on the ledge, the upper surface of the luggage board is substantially flush with the plate luggage rear 70. This facilitates the user sliding luggage straight into the luggage compartment.

One mounting bracket 50 is mounted on the seat frame at, or near to, each side of the vehicle 100. In addition, a third mounting bracket 50 is positioned approximately half way between the two mounting brackets.

The cover board 60 is pivotably attached to the mounting bracket 50 by the anchor point 58. The cover board 60 is a light, thin board that is intended to cover the join between the seat backs 36 and the luggage board 40. When the third row seats 30 are in use, as shown in Figures 5 to 8, the cover board is substantially vertical. When the third row seats are tipped forward into the stowed position, the cover board also adopts a horizontal position, still in contact with a part of the seat back 36. In each case, the cover board 60 prevents any small loose items within the luggage area from moving under the seats 30.

As shown in Figure 2, when the third row seats 30 are stowed and the luggage board 40 is in the horizontal configuration, the luggage board is prevented from moving because it abuts the box-section portion 59 and the vertical surface of the plate luggage rear ledge 71. The luggage board 40, cover board 60 and the back surface of the seat back 36 provide a continuous, substantially horizontal surface that is flush with the plate luggage rear 70. This makes it easy for the user to slide items into the luggage compartment without having to lift them over a sill.

The luggage board 40 is prevented from movement in the vertical plane because the front edge 42 rests on the upper surface of the U-shaped recess and the back edge 44 rests on a the ledge 71 that is provided on the forward vertical surface of the plate luggage rear 70.

Furthermore, it will be readily apparent from Figure 2 that an additional volume 80 of storage space is available beneath the luggage board 40. This volume 80 is accessed by lifting the luggage board 40 or pivoting it around the abutment between the back edge of the luggage board 40 and the box-section portion 59. This volume 80 is particularly useful for stowing items when the vehicle is left unattended as the items stowed within this area cannot be seen from outside the vehicle 100.

Figures 5 to 8 show the luggage board 40 in the vertical configuration. In this configuration, the luggage board 40 is held in place as a result of the U-shaped recess 52 of the mounting bracket 50 pinching the front edge 42 of the luggage board 40. In this configuration the volume 80 is combined with the volume above in order to accommodate a tall item 90 of luggage, as shown in Figure 6.

Because the mounting bracket 50 is positioned on the seat frame and not on the seat back, the luggage board 40 can be mounted in either the horizontal or the vertical configuration regardless of the position of the seat 30. Indeed, as shown in Figure 6, the luggage board 40 can be placed in the vertical configuration in order to accommodate a tall item 90 of luggage and, in addition, to constrain the movement of that item so that the portion of the luggage compartment above the folded third row seats can be used to stow other items that need to be kept separate from the large item 90.

The vehicle 100 has a suspended floor and, beneath the suspended floor, is an area in which a space-saver spare wheel is stowed. Because the mounting bracket 50 is attached to the seat frame and the seat 30 is configured to tip and tumble, the seat can pivot about a point close to the front of the seat base thus lifting the rear portion of the seat base and the mounting bracket to allow access to the space beneath the seat in which the space-saver spare wheel is stowed.

Although the present invention has been described hereinabove with reference to a three row seating configuration, the skilled man will appreciate that it is not limited to use in vehicles with a three row seating configuration. Indeed, it is applicable to any vehicle that has a suspended floor and a requirement to subdivide the luggage compartment without compromising the access to a spare wheel stowed beneath the suspended floor.

## Claims

1. A luggage system for use in a vehicle comprising at least one seat mounted on a seat frame, the luggage system comprising:
- said seat frame
- at least one mounting bracket (50) comprising a recess for holding a luggage board (40) in a substantially vertical position, **characterised in that**,
the mounting bracket (50) is mounted to the seat frame.

2. The luggage system according to claim 1, further comprising a luggage board.

3. The luggage system according to claim 2, wherein the mounting bracket (50) is further configured to permit the luggage board to be retained in a substantially horizontal position.

4. The luggage system according to claim 2 or claim 3, wherein the luggage board (40) is carpet covered and has a light, honeycomb core.

5. The luggage system according to any one of claims 1 to 4, wherein the recess is U-shaped.

6. The luggage system according to any one of claims 1 to 5, wherein the recess has non-parallel walls.

7. The luggage system according to any one of claims 2 to 6, wherein the luggage board has a back edge that is tapered in order to interface with the walls of the U-shaped recess.

8. The luggage system according to claim 7, wherein the angle of taper of the back edge of the luggage board is different from the angle between the non-parallel walls of the recess.

9. The luggage system according to any one of the preceding claims, further comprising a cover board and an anchor point on the mounting bracket for pivotable mounting of the cover board.

10. The luggage system according to any one of the preceding claims, wherein there are two mounting brackets.

11. The luggage system according to claim 10, further comprising a third mounting bracket.

12. The luggage system according to any one of the preceding claims, wherein the seat frame is configured to move between a first in-use position and a second position and, wherein the mounting bracket is arranged to move with the seat.

## Patentansprüche

1. Gepäcksystem zur Verwendung in einem Fahrzeug, das mindestens einen auf einem Sitzrahmen montierten Sitz umfasst, wobei das Gepäcksystem Folgendes umfasst:
- den Sitzrahmen
- mindestens eine Montagehalterung (50), die eine Ausnehmung zum Halten eines Gepäckbretts (40) in einer im Wesentlichen vertikalen Position umfasst,
**dadurch gekennzeichnet, dass**
die Montagehalterung (50) an dem Sitzrahmen montiert ist.

2. Gepäcksystem nach Anspruch 1, das weiterhin ein Gepäckbrett umfasst.

3. Gepäcksystem nach Anspruch 2, wobei die Montagehalterung (50) weiterhin konfiguriert ist zu gestatten, dass das Gepäckbrett in einer im Wesentlichen horizontalen Position gehalten wird.

4. Gepäcksystem nach Anspruch 2 oder 3, wobei das Gepäckbrett (40) mit einem Teppich bedeckt ist und einen leichten Honigwabenkern aufweist.

5. Gepäcksystem nach einem der Ansprüche 1 bis 4, wobei die Ausnehmung U-förmig ist.

6. Gepäcksystem nach einem der Ansprüche 1 bis 5, wobei die Ausnehmung nichtparallele Wände aufweist.

7. Gepäcksystem nach einem der Ansprüche 2 bis 6, wobei das Gepäckbrett einen hinteren Rand aufweist, der verjüngt ist, um mit den Wänden der U-förmigen Ausnehmung zu koppeln.

8. Gepäcksystem nach Anspruch 7, wobei der Winkel der Verjüngung des hinteren Rands des Gepäckbretts von dem Winkel zwischen den nicht-parallelen Wänden der Ausnehmung verschieden ist.

9. Gepäcksystem nach einem der vorhergehenden Ansprüche, das weiterhin eine Abdeckplatte und einen Verankerungspunkt an der Montagehalterung zum schwenkbaren Montieren der Abdeckplatte umfasst.

10. Gepäcksystem nach einem der vorhergehenden Ansprüche, wobei es zwei Montagehalterungen gibt.

11. Gepäcksystem nach Anspruch 10, das weiterhin eine dritte Montagehalterung umfasst.

12. Gepäcksystem nach einem der vorhergehenden Ansprüche, wobei der Sitzrahmen so konfiguriert ist, dass er sich zwischen einer ersten Gebrauchsposition und einer zweiten Position bewegt, und wobei die Montagehalterung so ausgelegt ist, dass sie sich mit dem Sitz bewegt.

## Revendications

1. Système de coffre à utiliser dans un véhicule comprenant au moins un siège monté sur une armature de siège, le système de coffre comprenant :
- ladite armature de siège
- au moins un support de montage (50) comprenant un évidement permettant de maintenir un panneau de coffre (40) dans une position sensiblement verticale,
**caractérisé en ce que**
le support de montage (50) est monté sur l'armature de siège.

2. Système de coffre selon la revendication 1, comprenant en outre un panneau de coffre.

3. Système de coffre selon la revendication 2, dans lequel le support de montage (50) est en outre configuré pour permettre au panneau de coffre d'être gardé dans une position sensiblement horizontale.

4. Système de coffre selon la revendication 2 ou la revendication 3, dans lequel le panneau de coffre (40) est couvert de moquette et a une âme légère en nid d'abeilles.

5. Système de coffre selon l'une quelconque des revendications 1 à 4, dans lequel l'évidement est en forme de U.

6. Système de coffre selon l'une quelconque des revendications 1 à 5, dans lequel l'évidement a des parois non parallèles.

7. Système de coffre selon l'une quelconque des revendications 2 à 6, dans lequel le panneau de coffre a un bord arrière qui est effilé afin de se raccorder aux parois de l'évidement en forme de U.

8. Système de coffre selon la revendication 7, dans lequel l'angle d'effilement du bord arrière du panneau de coffre est différent de l'angle entre les parois non parallèles de l'évidement.

9. Système de coffre selon l'une quelconque des revendications précédentes, comprenant en outre un panneau de recouvrement et un point d'ancrage sur le support de montage pour un montage pivotant du panneau de recouvrement.

10. Système de coffre selon l'une quelconque des revendications précédentes, dans lequel il y a deux supports de montage.

11. Système de coffre selon la revendication 10, comprenant en outre un troisième support de montage.

12. Système de coffre selon l'une quelconque des revendications précédentes, dans lequel l'armature de siège est configurée pour se déplacer entre une première position en utilisation et une seconde position et, dans lequel le support de montage est agencé pour se déplacer avec le siège.
